# EUROPEAN PATENT SPECIFICATION

(11) **EP 2 950 486 B1**
(45) Date of publication and mention of the grant of the patent: **06.11.2019**
(21) Application number: 15166790.4
(22) Date of filing: 07.05.2015
(51) Int. Cl.: H04L 12/58

(54) **METHOD AND DEVICE FOR MANAGING INSTANT MESSAGE**
VERFAHREN UND VORRICHTUNG ZUR VERWALTUNG EINER SOFORTNACHRICHT
PROCÉDÉ ET DISPOSITIF DE GESTION DE MESSAGE INSTANTANÉ

(30) Priority: 27.05.2014 CN 201410228013
(43) Date of publication of application: 02.12.2015
(73) Proprietor: Xiaomi Inc., Beijing 100085 (CN)
(72) Inventor: Liu, Guoming, 100085 BEIJING (CN)
(74) Representative: Underwood, Nicolas Patrick

(56) References cited:
- WO-A1-01/80214
- US-A1- 2007 168 445
- US-A1- 2014 082 096
- US-B1- 8 631 076

## Description

### TECHNICAL FIELD

The present invention relates to the field of instant messaging, and more particularly, to a method and a device for managing an instant message.

### BACKGROUND

Instant messaging relates to being able to send and receive Internet messages instantly. With the development of mobile Internet, instant messaging is no longer a simple chat tool, it has developed into a comprehensive information platform integrating communication, information, entertainment, search, e-commerce, office collaboration and enterprise customer service and so on.

Instant messaging may allow a single user dialogue between two clients and may also allow a multi-user dialogue among multiple clients. For current instant messaging clients, the instant messages in the dialogue window are shown according to a time sequence, no matter whether the single user dialogue or the multi-user dialogue is made.

Although this manner facilitates the user to read the newest message, it is very hard for the user to look for the messages when the messages in one theme are distributed at different moments, and it often needs to browse the history messages for several times to acquire the respective pieces of messages in one theme. Therefore, the manner to arrange the instant messages according to the time sequence is disadvantageous in browsing and looking for the instant message based on theme, and the efficiency is low.

Document US 8 631 076 discloses a known method for managing instant messages.

### SUMMARY

In view of the above, the present invention provides a method and a device for managing an instant message, so as to improve the efficiency of browsing and looking for the instant message.

The present invention relates to a method, a device, a terminal, a computer program and a recording medium readable by a computer for managing an instant message according to the wording of claims 1, 6, 11, 12 and 13 respectively.

Further aspects and details of the invention are set out in the dependent claims.

The computer program can use any programming language and take the form of source code, object code or a code intermediate between source code and object code, such as a partially compiled form, or any other desirable form.

The recording medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The technical solutions provided by the embodiments of the present invention may include the following advantageous effects: whether the instant message is a reply message to an existing message is judged at the time of receiving and sending the instant message; one session is created and the instant message set as a root node is added to the session if the instant message is not the reply message to the existing message; and the instant message is added to a session in which the existing message is and the instant message is set as a child node of the existing message if the instant message is the reply message to the existing message. This makes the associated instant messages form a session having a tree structure and provides one brand-new instant message storage mode, which may facilitate browsing and looking for the instant message quickly according to the father-child relationship between the nodes, improving the efficiency of browsing and looking for the instant message extremely and being more convenient for use.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for managing an instant message according to an exemplary embodiment.
Fig. 2 is a flow chart of a method for managing an instant message according to another exemplary embodiment.
Fig. 3 is a flow chart of a method for managing an instant message according to another exemplary embodiment.
Fig. 4 is a block diagram of a device for managing an instant message according to another exemplary embodiment.
Fig. 5 is a block diagram of a device for managing an instant message according to another exemplary embodiment.
Fig. 6 is a block diagram of a device for managing an instant message according to another exemplary embodiment.
Fig. 7 is a block diagram of a device for managing an instant message according to another exemplary embodiment.
Fig. 8 is a block diagram of a device for managing an instant message according to another exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects associated to the invention as recited in the appended claims.

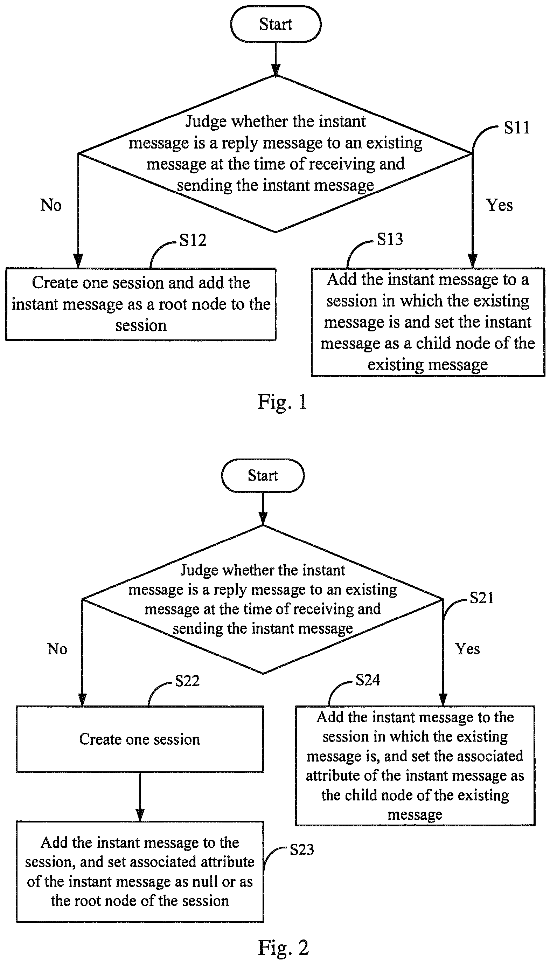

Fig. 1 is a flow chart of a method for managing an instant message according to an exemplary embodiment. Referring to Fig. 1, the method is used in a terminal, including the following steps.

In step S11, whether the instant message is a reply message to an existing message is judged at the time of receiving and sending the instant message. Step S12 is performed if the instant message is not the reply message to the existing message; step S13 is performed if the instant message is the reply message to the existing message.

In the present embodiment, the instant message may be the instant message to be sent by a local terminal, and may also be the received instant message sent by other terminals. The instant message may be the message in the single user dialogue and may also be the message in the multi-user dialogue. The present embodiment does not make specific limitations for this.

In step S12, one session is created, and the instant message set as a root node is added to the session. The process ends.

In the present embodiment, the session is a set of instant messages, which includes at least one piece of instant message and usually includes multiple pieces of instant messages. Except for the first piece, the remaining pieces in the respective pieces of instant messages in the session are all reply messages. Therefore, the instant messages in one session all have relevance, which may be considered as the instant messages with respect to the same theme. For example, there are 20 pieces of instant messages in a session with respect to the theme "birthday" in the single user dialogue between the terminal A and the terminal B. In the multi-user dialogue among the terminal A, the terminal C and the terminal D, there are 30 pieces of instant messages in a session with respect to the theme "festival", there are 50 pieces of instant messages in a session with respect to the theme "ticket" and so on.

Various kinds of information associated to the session, such as the theme name and the timestamp of the session, may be generated when the session is created.

Optionally, a default theme name may be generated for the session or a content input by a user may be set as the theme name of the session after one session is created. The default theme name may be part or whole content of the first piece of instant message in the session. Of course, the edit function may be also provided to the user, and the user may input the desired content in the edit box of the theme name of the session to set it as the theme name of the session. The timestamp of the first piece of instant message in the session may be set as the timestamp of the session. The present embodiment does not make specific limitations for this.

In step S13, the instant message is added to a session in which the existing message is and the instant message is set as a child node of the existing message. The process ends.

A session having a tree structure may be obtained after the instant message is stored according to the above method, and each session has its own theme. For the local terminal, a plurality of sessions may be obtained. A session list may be established to store the sessions when there are a plurality of sessions. The session list may be shown when the session is shown on the terminal. The sessions in the session list are arranged according to the timestamp of the session, thus facilitating the user to view. The shown session at least includes the theme name of the session. In addition, the instant message in the session may be also shown. Optionally, the respective pieces of instant messages in the session may be shown in a tree structure, or be shown in a thumbnail where the tree structure is unfolded after being clicked by the user, and so on. The present embodiment does not make specific limitation for this.

The above method may be applied to the single user dialogue and the multi-user dialogue. The above method may form relevancy logically by hierarchy according to the theme and obtain sessions of tree structure for respective themes when the terminal participates in the multi-user dialogue and the multi-user dialogue includes discussions of a plurality of themes, which makes it more convenient for the user to browse and look for the instant message. Compared with the way in which the respective instant messages are arranged according to the time sequence, it saves time for browsing and looking for the instant message extremely, improves the efficiency and facilitates the use by a user.

In the present embodiment, optionally, creating one session and adding the instant message as the root node to the session may include:
creating one session and adding the instant message to the session; and
setting associated attribute of the instant message as null or as the root node of the session.

In the present embodiment, optionally, adding the instant message to the session in which the existing message is and setting the instant message as the child node of the existing message may include:
adding the instant message to the session in which the existing message is; and
setting the associated attribute of the instant message as the child node of the existing message.

In the present embodiment, optionally, the method may further include:
detecting a designation operation to any instant message in any session; and
creating one new session, setting the any instant message as the root node and adding the any instant message and child nodes thereof to the new session.

In the present embodiment, optionally, the method may further include:
deleting the any instant message and the child nodes thereof from the any session after detecting the designation operation to the any instant message in the any session.

In the method provided by the present embodiment, whether the instant message is a reply message to an existing message is judged at the time of receiving and sending the instant message; one session is created and the instant message set as a root node is added to the session if the instant message is not the reply message to the existing message; and the instant message is added to the session in which the existing message is and the instant message is set as a child node of the existing message if the instant message is the reply message to the existing message. This makes the associated instant messages form a session having a tree structure and provides one brand-new instant message storage mode, which may facilitate browsing and looking for the instant message quickly according to the father-child relationship between the nodes, improving the efficiency of browsing and looking for the instant message extremely and being more convenient for use.

Fig. 2 is a flow chart of a method for managing an instant message according to another exemplary embodiment. Referring to Fig. 2, the method is used in a terminal, including the following steps.

In step S21, whether the instant message is a reply message to an existing message is judged at the time of receiving and sending the instant message. Step S22 is performed if the instant message is not the reply message to the existing message; step S24 is performed if the instant message is the reply message to the existing message.

In step S22, one session is created.

A default theme name may also be generated for the session or a content input by a user may be set as the theme name of the session after one session is created. Of course, the information such as ID of the session and the timestamp of the session may also be generated.

In step S23, the instant message is added to the session, and associated attribute of the instant message is set as null or as the root node of the session. The process ends.

The root node is the first node in the session and is the top of the tree structure. There is only one root node in a tree structure. The root node may have a plurality of child nodes, and the root node is the father node of the plurality of child nodes. Each child node may also have its own child node. As for arbitrary two pieces of instant messages, if the instant message B is the reply message to the instant message A, then A is the father node and B is the child node.

Generally, the information associated to the instant message includes many kinds: ID of the message, timestamp, and the content of the message. In the present embodiment, the associated information of the instant message may further include: ID and the associated attribute of the session that the instant message belongs to, and so on. The associated attribute is used to set the relevance of the current instant message and other instant messages. For example, the associated attribute of the current node may be set as null or as ID of the current node to represent that the node is the root node of one session, or the associated attribute of the current node may be set as ID of a father node to represent that the current node is a child node of the father node.

In step S24, the instant message is added to the session in which the existing message is, and the associated attribute of the instant message is set as the child node of the existing message. The process ends.

Setting the associated attribute of the instant message as the child node of the existing message may include:
setting the associated attribute of the instant message as ID of the existing message to represent that the existing message is the father node of the current instant message and the current instant message is the child node of the existing message, thus establishing the relevance of the existing instant message and the current instant message.

In the present embodiment, optionally, the method may further include:
detecting a designation operation to any instant message in any session; and
creating one new session, setting the any instant message as the root node and adding the any instant message and child nodes thereof to the new session.

In the present embodiment, optionally, the method may further include:
deleting the any instant message and the child nodes thereof from the any session after detecting the designation operation to the any instant message in the any session.

In the method provided by the present embodiment, whether the instant message is a reply message to an existing message is judged at the time of receiving and sending the instant message; one session is created, the instant message is added to the session, and associated attribute of the instant message is set as null or as the root node of the session if the instant message is not the reply message to the existing message; the instant message is added to the session in which the existing message is and the associated attribute of the instant message is set as a child node of the existing message if the instant message is the reply message to the existing message. This makes the associated instant messages form a session of a tree structure and provides one brand-new instant message storage mode, which may facilitate browsing and looking for the instant message quickly according to the father-child relationship between the nodes, improving the efficiency of browsing and looking for the instant message extremely and being more convenient for use.

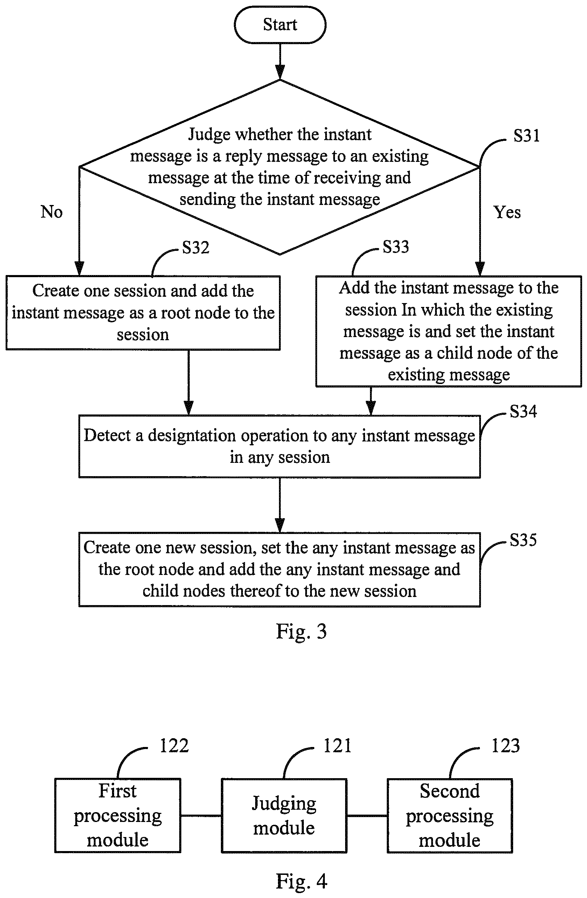

Fig. 3 is a flow chart of a method for managing an instant message according to another exemplary embodiment. Referring to Fig. 3, the method is used in a terminal, and includes the following steps.

In step S31, whether the instant message is a reply message to an existing message is judged at the time of receiving and sending the instant message. Step S32 is performed if the instant message is not the reply message to the existing message; step S33 is performed if the instant message is the reply message to the existing message.

In step S32, one session is created, and the instant message setting as a root node is added to the session; and then step S34 is performed.

The step may include the following steps:
creating one session and adding the instant message to the session; and
setting associated attribute of the instant message as null or as the root node of the session.

In step S33, the instant message is added to the session in which the existing message is, and the instant message is set as the child node of the existing message; and then step S34 is performed.

The step may include the following steps:
adding the instant message to the session in which the existing message is; and
setting the associated attribute of the instant message as the child node of the existing message.

In step S34, a designation operation to any instant message in any session is detected.

In the present embodiment, the designation operation may be set according to the requirement; it may be any operation, such as long press operation, single-click operation, double-click operation, drag operation and so on. The any session may be the session created in step S32, and may also be the session in which the existing message is in step S33.

In step S35, one new session is created, the any instant message is set as the root node, and the any instant message and the child nodes thereof are added to the new session.

The any instant message and the child nodes thereof include all the child nodes following the any instant message. Adding the any instant message and the child nodes thereof to the new session may be achieved by the following way: setting the any instant message as the root node, i.e., the associated attribute being null or its own ID; the associated attribute of all the remaining child nodes does not change, which still retains the father-child relationship in the original session.

After the new session of this step is created, if there is already a session list, then the new session is added to the session list, and the sequence of sessions is rearranged according to the timestamp of the session, thus facilitating the user to browse and look for the instant message. The theme name of the new session may also be set, which will not be repeatedly illustrated herein.

After detecting the designation operation to the any instant message in the any session, the method may further include:
deleting the any instant message and the child nodes thereof from the any session.

The deleting operation refers to the operation of deleting the associated attribute, which does not mean to delete the content of the instant message. It may be achieved by the following way: deleting the associated attribute of the any instant message and the child nodes thereof, then these nodes no longer belong to any session and there is no father-child relationship either. The user may look for the corresponding instant message according to the timestamp.

In the present embodiment, the any instant message being performed the designation operation and the child nodes thereof may be deleted or may not be deleted. In the case of being deleted, the any instant message and the child nodes thereof no longer exist in the original session; in the case of being not deleted, the original session still retains the any instant message and the child nodes thereof, which corresponds to duplicating one copy to the new created session.

For example, the tree structure of the session 1 is: the root node A, the child nodes B and C of the root node, the child nodes D and E of node B and the child node F of node C; the session 2 is created, and the child node B and the child nodes D and E of node B are added to the session 2 after the long press operation to the child node B is detected, which achieves the effect of separating a part of the content of the session 1 to the new created session 2. In the session 2, B is the root node, and D and E are the child nodes thereof. The child nodes B, D and E may be deleted from or retained in the session 1.

The existing session may be managed conveniently by this way. If the content of the original session is large and may relate to a plurality of themes, the branch therein may be separated rapidly and managed as one session alone.

In the present embodiment, after creating any one session, the method may further include:
generating a default theme name for the session or setting a content input by a user as the theme name of the session.

In the method provided by the present embodiment, whether the instant message is a reply message to an existing message is judged at the time of receiving and sending the instant message; one session is created and the instant message setting as a root node is added to the session if the instant message is not the reply message to the existing message; and the instant message is added to the session in which the existing message is and the instant message is set as a child node of the existing message if the instant message is the reply message to the existing message. This makes the associated instant messages form a session of a tree structure and provides one brand-new instant message storage mode, which may facilitate to browse and look for the instant message quickly according to the father-child relationship between the nodes, improving the efficiency of browsing and looking for the instant message extremely and being more convenient for use. In addition, one new session is created, the any instant message is set as the root node, and the any instant message and the child nodes thereof are added to the new session, when the designation operation to the any instant message in the any session is detected. This makes a part of the instant messages be separated from one session to form a new session, achieving the management and maintenance to the existed session of a tree structure and attaining the effect of adjusting the tree structure, making it more convenient and faster to manage the instant message based on the session.

Fig. 4 is a block diagram of a device for managing an instant message according to another exemplary embodiment. Referring to Fig. 4, the device includes a judging module 121, a first processing module 122 and a second processing module 123.

The judging module 121 is configured to judge whether the instant message is a reply message to an existing message at the time of receiving and sending the instant message.

The first processing module 122 is configured to create one session and add the instant message as a root node to the session when the instant message is not the reply message to the existing message.

The second processing module 123 is configured to add the instant message to a session in which the existing message is and set the instant message as a child node of the existing message when the instant message is the reply message to the existing message.

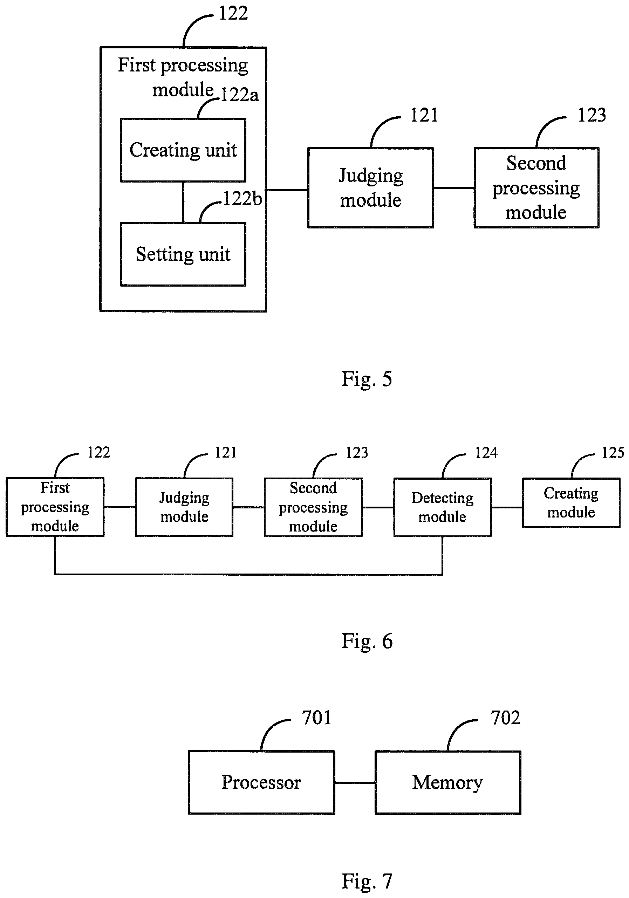

Fig. 5 is a block diagram of a device for managing an instant message according to another exemplary embodiment. Referring to Fig. 5, the first processing module 122 may include: a creating unit 122a and a setting unit 122b.

The creating unit 122a is configured to create one session and add the instant message to the session when the instant message is not the reply message to the existing message.

The setting unit 122b is configured to set associated attribute of the instant message as null or as the root node of the session.

In the present embodiment, the second processing module 123 may include: an adding unit and a setting unit.

The adding unit is configured to add the instant message to the session in which the existing message is when the instant message is the reply message to the existing message.

The setting unit is configured to set the associated attribute of the instant message as the child node of the existing message.

Fig. 6 is a block diagram of a device for managing an instant message according to another exemplary embodiment. Referring to Fig. 6, the device may further include: a detecting module 124 and a creating module125.

The detecting module 124 is configured to detect a designation operation to any instant message in any session.

The creating module 125 is configured to create one new session, set the any instant message as the root node, and add the any instant message and the child nodes thereof to the new session, when the detecting module detects the designation operation to the any instant message in the any session.

In the present embodiment, the device may further include: a deleting module.

The deleting module is configured to delete the any instant message and the child nodes thereof from the any session after the deleting module detects the designation operation to the any instant message in the any session.

In the present embodiment, the device may further include:
a setting module configured to generate a default theme name for the session or set a content input by a user as the theme name of the session after the first processing module creates one session.

As for the devices in the above embodiments, the specific manners for performing operations for individual modules thereof have been described in detail in the embodiments regarding the methods, which will not be elaborated herein.

In the device provided by the present embodiment, whether the instant message is a reply message to an existing message is judged at the time of receiving and sending the instant message; one session is created and the instant message set as a root node is added to the session if the instant message is not the reply message to the existing message; and the instant message is added to the session in which the existing message is and the instant message is set as a child node of the existing message if the instant message is the reply message to the existing message. This makes the associated instant messages form a session of a tree structure and provides one brand-new instant message storage mode, which may facilitate to browse and look for the instant message quickly according to the father-child relationship between the nodes, improving the efficiency of browsing and looking for the instant message extremely and being more convenient for use.

Fig. 7 is a block diagram of a device for managing an instant message according to another exemplary embodiment. The device includes:
a processor 701 and a memory 702 for storing instructions executable by the processor;
wherein, the processor is configured to:
   judge whether the instant message is a reply message to an existing message at the time of receiving and sending the instant message;
   create one session and add the instant message as a root node to the session if the instant message is not the reply message to the existing message; or
   add the instant message to a session in which the existing message is and set the instant message as a child node of the existing message if the instant message is the reply message to the existing message.

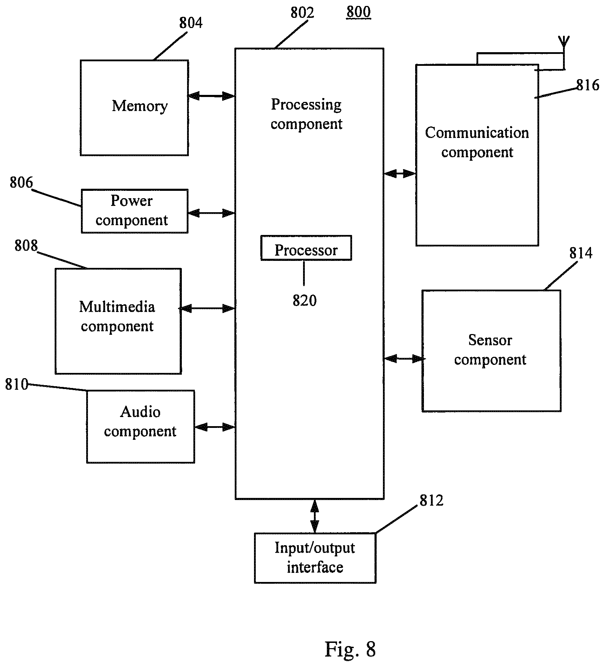

Fig. 8 is a block diagram of a device 800 for managing an instant message according to another exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slides, and gestures on the touch panel. The touch sensors may not only sense a boundary of a touch or slide action, but also sense a period of time and a pressure associated with the touch or slide action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for managing the instant message.

In the device provided by the present embodiment, whether the instant message is a reply message to an existing message is judged at the time of receiving and sending the instant message; one session is created and the instant message set as a root node is added to the session if the instant message is not the reply message to the existing message; and the instant message is added to the session in which the existing message is and the instant message is set as a child node of the existing message if the instant message is the reply message to the existing message. This makes the associated instant messages form a session of a tree structure and provides one brand-new instant message storage mode, which may facilitate to browse and look for the instant message quickly according to the father-child relationship between the nodes, improving the efficiency of browsing and looking for the instant message extremely and being more convenient for use.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer-readable storage medium having stored therein instructions that, when executed by a processor of a mobile terminal, cause the mobile terminal to perform a method for managing an instant message, the method including:
judging whether the instant message is a reply message to an existing message at the time of receiving and sending the instant message;
creating one session and adding the instant message as a root node to the session if the instant message is not the reply message to the existing message; or
adding the instant message to the session in which the existing message is and setting the instant message as a child node of the existing message if the instant message is the reply message to the existing message.

Optionally, creating one session and adding the instant message as the root node to the session includes:
creating one session and adding the instant message to the session; and
setting associated attribute of the instant message as null or as the root node of the session.

Optionally, adding the instant message to the session in which the existing message is and setting the instant message as the child node of the existing message includes:
adding the instant message to the session in which the existing message is; and
setting the associated attribute of the instant message as the child node of the existing message.

Optionally, the method further includes:
detecting a designation operation to any instant message in any session; and
creating one new session, setting the any instant message as the root node and adding the any instant message and the child nodes thereof to the new session.

Optionally, the method further includes:
deleting the any instant message and the child nodes thereof from the any session after detecting the designation operation to the any instant message in the any session.

Optionally, the method further includes:
generating a default theme name for the session or setting a content input by a user as the theme name of the session after one session is created.

In the non-transitory computer-readable storage medium provided by the present embodiment, whether the instant message is a reply message to an existing message is judged at the time of receiving and sending the instant message; one session is created and the instant message set as a root node is added to the session if the instant message is not the reply message to the existing message; and the instant message is added to the session in which the existing message is and the instant message is set as a child node of the existing message if the instant message is the reply message to the existing message. This makes the associated instant messages form a session of a tree structure and provides one bran-new instant message storage mode, which may facilitate to browse and look for the instant message quickly according to the father-child relationship between the nodes, improving the efficiency of browsing and looking for the instant message extremely and being more convenient for use.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for managing an instant message comprising the steps of:
judging (S11) whether the instant message is a reply message to an existing message at the time of receiving and sending the instant message;
creating (S12) one session and adding the instant message as a root node to the session if the instant message is not the reply message to the existing message; or
adding (S13) the instant message to a session in which the existing message is and setting the instant message as a child node of the existing message if the instant message is the reply message to the existing message, and further setting (S24) the associated attribute of the instant message as the child node of the existing message,
the method being **characterized in that**
the session has a tree structure in which there is only one root node in the tree structure, the root node being the first node and is the top of the tree structure, the root node being the father of a plurality of child nodes and each child node may have its own child nodes.

2. The method according to claim 1, **characterized in that**, creating one session and adding the instant message as the root node to the session comprises:
creating (S22) one session and adding the instant message to the session; and
setting (S23) associated attribute of the instant message as null or as the root node of the session.

3. The method according to claim 1, **characterized in that**, the method further comprises:
detecting (S34) a designation operation to any instant message in any session; and
Creating (S35) one new session, setting the any instant message as a root node, and adding the any instant message and child nodes thereof to the new session.

4. The method according to claim 3, **characterized in that**, the method further comprises:
deleting the any instant message and the child nodes thereof from the any session after detecting the designation operation to the any instant message in the any session.

5. The method according to claim 1, **characterized in that**, the method further comprises:
after one session is created, generating a default theme name for the session or setting a content input by a user as the theme name of the session.

6. A device for managing an instant message comprising:
a judging module (121) configured to judge whether the instant message is a reply message to an existing message at the time of receiving and sending the instant message;
a first processing module (122) configured to create one session and add the instant message as a root node to the session when the instant message is not the reply message to the existing message; and
a second processing module (123) configured to add the instant message to a session in which the existing message is and set the instant message as a child node of the existing message when the instant message is the reply message to the existing message,
and further configured to set the associated attribute of the instant message as the child node of the existing message, **characterized in that**
the session has a tree structure in which there is only one root node in the tree structure, the root node being the first node and is the top of the tree structure, the root node being the father of a plurality of child nodes and each child node may have its own child nodes.

7. The device according to claim 6, **characterized in that**, the first processing module comprises:
a creating unit (122a) configured to create one session and add the instant message to the session when the instant message is not the reply message to the existing message; and
a setting unit (122b) configured to set associated attribute of the instant message as null or as the root node of the session.

8. The device according to claim 6, **characterized in that**, the device further comprises:
a detecting module (124) configured to detect a designation operation to any instant message in any session; and
a creating module (125) configured to create one new session, set the any instant message as a root node and add the any instant message and child nodes thereof to the new session when the detecting module detects the designation operation to the any instant message in the any session.

9. The device according to claim 8, **characterized in that**, the device further comprises:
a deleting module configured to delete the any instant message and the child nodes thereof from the any session after the detecting module detects the designation operation to the any instant message in the any session.

10. The device according to claim 6, **characterized in that**, the device further comprises:
a setting module configured to, after the first processing module creates one session, generate a default theme name for the session or set a content input by a user as the theme name of the session.

11. A terminal for managing an instant message comprising:
a processor and a memory for storing instructions executable by the processor;
wherein, the processor is configured to:
judge whether the instant message is a reply message to an existing message at the time of receiving and sending the instant message;
create one session and add the instant message as a root node to the session if the instant message is not the reply message to the existing message; or
add the instant message to a session in which the existing message is and set the instant message as a child node of the existing message if the instant message is the reply message to the existing message, and further configured to set the associated attribute of the instant message as the child node of the existing message, **characterized in that**
the session has a tree structure in which there is only one root node in the tree structure, the root node being the first node and is the top of the tree structure, the root node being the father of a plurality of child nodes and each child node may have its own child nodes.

12. A computer program which, when being executed on a processor of a device, performs a method according to any one of claims 1 to 5.

13. A recording medium readable by a computer and having recorded thereon a computer program including instructions for executing a method according to any one of claims 1 to 5.

## Patentansprüche

1. Verfahren zum Verwalten einer Sofortnachricht, umfassend die Schritte des:
Beurteilens (S11), ob die Sofortnachricht eine Antwortnachricht auf eine bestehende Nachricht ist, zu dem Zeitpunkt eines Empfangens und Sendens der Sofortnachricht,
Erzeugens (S12) einer Sitzung und Hinzufügens der Sofortnachricht als einen Wurzelknoten zu der Sitzung, wenn die Sofortnachricht nicht die Antwortnachricht auf die bestehende Nachricht ist, oder
Hinzufügens (S13) der Sofortnachricht zu einer Sitzung, in welcher sich die bestehende Nachricht befindet, und Festlegens der Sofortnachricht als einen Kindsknoten der bestehenden Nachricht, wenn die Sofortnachricht die Antwortnachricht auf die bestehende Nachricht ist, und ferner Festlegens (S24) des zugeordneten Attributs der Sofortnachricht als den Kindsknoten der bestehenden Nachricht,
wobei das Verfahren **dadurch gekennzeichnet ist, dass**
die Sitzung eine Baumstruktur aufweist, wobei nur ein Wurzelknoten in der Baumstruktur vorhanden ist, wobei der Wurzelknoten der erste Knoten ist und die Spitze der Baumstruktur ist, wobei der Wurzelknoten der Vater mehrerer Kindsknoten ist und jeder Kindsknoten seine eigenen Kindsknoten aufweisen kann.

2. Verfahren nach Anspruch 1, **dadurch gekennzeichnet, dass** das Erzeugen einer Sitzung und Hinzufügen der Sofortnachricht als den Wurzelknoten zu der Sitzung umfasst:
Erzeugen (S22) einer Sitzung und Hinzufügen der Sofortnachricht zu der Sitzung, und
Festlegen (S23) des zugeordneten Attributs der Sofortnachricht als null oder als den Wurzelknoten der Sitzung.

3. Verfahren nach Anspruch 1, **dadurch gekennzeichnet, dass** das Verfahren ferner umfasst:
Detektieren (S34) eines Bezeichnungsvorgangs für eine beliebige Sofortnachricht in einer beliebigen Sitzung, und
Erzeugen (S35) einer neuen Sitzung, Festlegen der beliebigen Sofortnachricht als einen Wurzelknoten und Hinzufügen der beliebigen Sofortnachricht und Kindsknoten davon zu der neuen Sitzung.

4. Verfahren nach Anspruch 3, **dadurch gekennzeichnet, dass** das Verfahren ferner umfasst:
Löschen der beliebigen Sofortnachricht und der Kindsknoten davon aus der beliebigen Sitzung nach dem Detektieren des Bezeichnungsvorgangs für die beliebige Sofortnachricht in der beliebigen Sitzung.

5. Verfahren nach Anspruch 1, **dadurch gekennzeichnet, dass** das Verfahren ferner umfasst:
nachdem eine Sitzung erzeugt worden ist, Generieren eines Standard-Themennamens für die Sitzung oder Festlegen einer Inhaltseingabe von einem Benutzer als den Themennamen der Sitzung.

6. Vorrichtung zum Verwalten einer Sofortnachricht, umfassend:
ein Beurteilungsmodul (121), das dazu ausgestaltet ist, zu dem Zeitpunkt eines Empfangens und Sendes der Sofortnachricht zu beurteilen, ob die Sofortnachricht eine Antwortnachricht auf eine bestehende Nachricht ist,
ein erstes Verarbeitungsmodul (122), das dazu ausgestaltet ist, eine Sitzung zu erzeugen und die Sofortnachricht als einen Wurzelknoten zu der Sitzung hinzuzufügen, wenn die Sofortnachricht nicht die Antwortnachricht auf die bestehende Nachricht ist, und
ein zweites Verarbeitungsmodul (123), das dazu ausgestaltet ist, die Sofortnachricht zu einer Sitzung hinzuzufügen, in welcher sich die bestehende Nachricht befindet, und die Sofortnachricht als einen Kindsknoten der bestehenden Nachricht festzulegen, wenn die Sofortnachricht die Antwortnachricht auf die bestehende Nachricht ist,
und ferner dazu ausgestaltet, das zugeordnete Attribut der Sofortnachricht als den Kindsknoten der bestehenden Nachricht festzulegen, **dadurch gekennzeichnet, dass** die Sitzung eine Baumstruktur aufweist, wobei nur ein Wurzelknoten in der Baumstruktur vorhanden ist, wobei der Wurzelknoten der erste Knoten ist und die Spitze der Baumstruktur ist, wobei der Wurzelknoten der Vater mehrerer Kindsknoten ist und jeder Kindsknoten seine eigenen Kindsknoten aufweisen kann.

7. Vorrichtung nach Anspruch 6, **dadurch gekennzeichnet, dass** das erste Verarbeitungsmodul umfasst:
eine Erzeugungseinheit (122a), die dazu ausgestaltet ist, eine Sitzung zu erzeugen und die Sofortnachricht zu der Sitzung hinzuzufügen, wenn die Sofortnachricht nicht die Antwortnachricht auf die bestehende Nachricht ist, und
eine Festlegungseinheit (122b), die dazu ausgestaltet ist, das zugeordnete Attribut der Sofortnachricht als null oder als den Wurzelknoten der Sitzung festzulegen.

8. Vorrichtung nach Anspruch 6, **dadurch gekennzeichnet, dass** die Vorrichtung ferner umfasst:
ein Detektionsmodul (124), das dazu ausgestaltet ist, einen Bezeichnungsvorgang für eine beliebige Sofortnachricht in einer beliebigen Sitzung zu detektieren, und
ein Erzeugungsmodul (125), das dazu ausgestaltet ist, eine neue Sitzung zu erzeugen, die beliebige Sofortnachricht als einen Wurzelknoten festzulegen und die beliebige Sofortnachricht und Kindsknoten davon zu der neuen Sitzung hinzuzufügen, wenn das Detektionsmodul den Bezeichnungsvorgang für die beliebige Sofortnachricht in der beliebigen Sitzung detektiert.

9. Vorrichtung nach Anspruch 8, **dadurch gekennzeichnet, dass** die Vorrichtung ferner umfasst:
ein Löschmodul, das dazu ausgestaltet ist, die beliebige Sofortnachricht und die Kindsknoten davon aus der beliebigen Sitzung zu löschen, nachdem das Detektionsmodul den Bezeichnungsvorgang für die beliebige Sofortnachricht in der beliebigen Sitzung detektiert hat.

10. Vorrichtung nach Anspruch 6, **dadurch gekennzeichnet, dass** die Vorrichtung ferner umfasst:
ein Festlegungsmodul, das dazu ausgestaltet ist, nachdem das erste Verarbeitungsmodul eine Sitzung erzeugt hat, einen Standard-Themennamen für die Sitzung zu generieren oder eine Inhaltseingabe von einem Benutzer als den Themennamen der Sitzung festzulegen.

11. Endgerät zum Verwalten einer Sofortnachricht, umfassend:
einen Prozessor und einen Speicher zum Speichern von Anweisungen, die von dem Prozessor ausführbar sind,
wobei der Prozessor dazu ausgestaltet ist:
zu dem Zeitpunkt eines Empfangens und Sendes der Sofortnachricht zu beurteilen, ob die Sofortnachricht eine Antwortnachricht auf eine bestehende Nachricht ist,
eine Sitzung zu erzeugen und die Sofortnachricht als einen Wurzelknoten zu der Sitzung hinzuzufügen, wenn die Sofortnachricht nicht die Antwortnachricht auf die bestehende Nachricht ist, oder
die Sofortnachricht zu einer Sitzung hinzuzufügen, in welcher sich die bestehende Nachricht befindet, und die Sofortnachricht als einen Kindsknoten der bestehenden Nachricht festzulegen, wenn die Sofortnachricht die Antwortnachricht auf die bestehende Nachricht ist, und ferner dazu ausgestaltet, das zugeordnete Attribut der Sofortnachricht als den Kindsknoten der bestehenden Nachricht festzulegen, **dadurch gekennzeichnet, dass**
die Sitzung eine Baumstruktur aufweist, wobei nur ein Wurzelknoten in der Baumstruktur vorhanden ist, wobei der Wurzelknoten der erste Knoten ist und die Spitze der Baumstruktur ist, wobei der Wurzelknoten der Vater mehrerer Kindsknoten ist und jeder Kindsknoten seine eigenen Kindsknoten aufweisen kann.

12. Computerprogramm, welches bei Ausführung auf einem Prozessor einer Vorrichtung ein Verfahren nach einem der Ansprüche 1 bis 5 durchführt.

13. Aufzeichnungsmedium, das von einem Computer gelesen werden kann und auf dem ein Computerprogramm aufgezeichnet ist, das Anweisungen zum Ausführen eines Verfahrens nach einem der Ansprüche 1 bis 5 beinhaltet.

## Revendications

1. Procédé de gestion d'un message instantané comprenant les étapes de :
jugement (S11) du fait que le message instantané est ou non un message de réponse à un message existant au moment de recevoir et d'envoyer le message instantané ;
création (S12) d'une session et ajout du message instantané en tant que nœud racine à la session si le message instantané n'est pas le message de réponse au message existant ; ou
ajout (S13) du message instantané à une session dans laquelle le message existant se trouve et définition du message instantané en tant que nœud enfant du message existant si le message instantané est le message de réponse au message existant,
et en outre définition (S24) de l'attribut associé du message instantané en tant que nœud enfant du message existant,
le procédé étant **caractérisé en ce que**
la session a une structure d'arbre dans laquelle il y a un seul nœud racine dans la structure d'arbre, le nœud racine étant le premier nœud et étant le sommet de la structure d'arbre, le nœud racine étant le père d'une pluralité de nœuds enfants et chaque nœud enfant peut avoir ses propres nœuds enfants.

2. Procédé selon la revendication 1, **caractérisé en ce que**, la création d'une session et l'ajout du message instantané en tant que nœud racine à la session comprennent :
la création (S22) d'une session et l'ajout du message instantané à la session ; et la définition (S23) de l'attribut associé du message instantané comme étant nul ou comme étant le nœud racine de la session.

3. Procédé selon la revendication 1, **caractérisé en ce que**, le procédé comprend en outre :
la détection (S34) d'une opération de désignation à un message instantané quelconque dans une session quelconque ; et
la création (S35) d'une nouvelle session, la définition du message instantané quelconque en tant que nœud racine, et l'ajout du message instantané quelconque et des nœuds enfants de celui-ci à la nouvelle session.

4. Procédé selon la revendication 3, **caractérisé en ce que**, le procédé comprend en outre :
la suppression du message instantané quelconque et des nœuds enfants de celui-ci de la session quelconque après détection de l'opération de désignation au message instantané quelconque dans la session quelconque.

5. Procédé selon la revendication 1, **caractérisé en ce que**, le procédé comprend en outre :
une fois qu'une session est créée, la génération d'un nom de thème par défaut pour la session ou la définition d'une entrée de contenu par un utilisateur en tant que nom de thème de la session.

6. Dispositif de gestion d'un message instantané comprenant :
un module de jugement (121) configuré pour juger si le message instantané est un message de réponse à un message existant au moment de la réception et de l'envoi du message instantané ;
un premier module de traitement (122) configuré pour créer une session et ajouter le message instantané en tant que nœud racine à la session lorsque le message instantané n'est pas le message de réponse au message existant ; et
un deuxième module de traitement (123) configuré pour ajouter le message instantané à une session dans laquelle le message existant se trouve et définir le message instantané en tant que nœud enfant du message existant lorsque le message instantané est le message de réponse au message existant,
et en outre configuré pour définir l'attribut associé du message instantané en tant que nœud enfant du message existant, **caractérisé en ce que**
la session comporte une structure d'arbre dans laquelle il y a un seul nœud racine dans la structure d'arbre, le nœud racine étant le premier nœud et étant le sommet de la structure d'arbre, le nœud racine étant le père d'une pluralité de nœuds enfants et chaque nœud enfant peut avoir ses propres nœuds enfants.

7. Dispositif selon la revendication 6, **caractérisé en ce que**, le premier module de traitement comprend :
une unité de création (122a) configurée pour créer une session et ajouter le message instantané à la session lorsque le message instantané n'est pas le message de réponse au message existant ; et
une unité de définition (122b) configurée pour définir un attribut associé du message instantané comme étant nul ou comme étant le nœud racine de la session.

8. Dispositif selon la revendication 6, **caractérisé en ce que**, le dispositif comprend en outre :
un module de détection (124) configuré pour détecter une opération de désignation d'un message instantané quelconque dans une session quelconque ; et
un module de création (125) configuré pour créer une nouvelle session, définir le message instantané quelconque en tant que nœud racine et ajouter le message instantané quelconque et les nœuds enfants de celui-ci à la nouvelle session lorsque le module de détection détecte l'opération de désignation du message instantané quelconque dans la session quelconque.

9. Dispositif selon la revendication 8, **caractérisé en ce que**, le dispositif comprend en outre :
un module de suppression configuré pour supprimer le message instantané quelconque et les nœuds enfants de celui-ci de la session quelconque après que le module de détection ait détecté l'opération de désignation du message instantané quelconque dans la session quelconque.

10. Dispositif selon la revendication 6, **caractérisé en ce que**, le dispositif comprend en outre :
un module de définition configuré pour, après que le premier module de traitement ait créé une session, générer un nom de thème par défaut pour la session ou définir une entrée de contenu par un utilisateur en tant que nom de thème de la session.

11. Terminal de gestion d'un message instantané comprenant :
un processeur et une mémoire pour stocker des instructions exécutables par le processeur ; dans lequel, le processeur est configuré pour :
juger si le message instantané est un message de réponse à un message existant au moment de recevoir et envoyer le message instantané ;
créer une session et ajouter le message instantané en tant que nœud racine à la session si le message instantané n'est pas le message de réponse au message existant ; ou
ajouter le message instantané à une session dans laquelle le message existant se trouve et définir le message instantané en tant que nœud enfant du message existant si le message instantané est le message de réponse au message existant, et en outre configuré pour définir l'attribut associé du message instantané comme étant le nœud enfant du message existant, **caractérisé en ce que**
la session a une structure d'arbre dans laquelle il y a un seul nœud racine dans la structure d'arbre, le nœud racine étant le premier nœud et est le sommet de la structure d'arbre, le nœud racine étant le père d'une pluralité de nœuds enfants et chaque nœud enfant peut avoir ses propres nœuds enfants.

12. Programme informatique qui, lorsqu'il est exécuté sur un processeur d'un dispositif, exécute un procédé selon l'une quelconque des revendications 1 à 5.

13. Support d'enregistrement lisible par un ordinateur et sur lequel est enregistré un programme informatique comprenant des instructions pour exécuter un procédé selon l'une quelconque des revendications 1 à 5.
